**Europäisches Patentamt**

**European Patent Office**

**Office européen des brevets**

(19)

(11) Numéro de publication: **0 226 483 B1**

(12)

# FASCICULE DE BREVET EUROPEEN

(45) Date de publication du fascicule du brevet:
**14.06.89**

(51) Int. Cl.⁴: **C10G 55/06**

(21) Numéro de dépôt: **86402296.7**

(22) Date de dépôt: **15.10.86**

(54) Procédé et appareil de craquage catalytique d'une charge hydrocarbonée soumise à un prétraitement par des particules de solides peu actives.

(30) Priorité: **12.11.85 FR 8516817**
**02.06.86 FR 8608008**

(43) Date de publication de la demande:
**24.06.87 Bulletin 87/26**

(45) Mention de la délivrance du brevet:
**14.06.89 Bulletin 89/24**

(84) Etats contractants désignés:
**DE GB IT NL**

(56) Documents cités:
**EP-A- 0 154 385**
**EP-A- 0 171 330**
**FR-A- 1 148 525**
**US-A- 4 243 514**

(73) Titulaire: **INSTITUT FRANCAIS DU PETROLE, 4, Avenue de Bois-Préau, F-92502 Rueil-Malmaison(FR)**

(72) Inventeur: **Martin, Gérard, 29, 31 Boulevard National, F-92500 Rueil-Malmaison(FR)**
Inventeur: **Feugier, Alain, 3, Ruelle du Moulle Morainvilliers, F-78630 Orgeval(FR)**

ACTORUM AG

## Description

La présente invention concerne un procédé de craquage catalytique d'une charge hydrocarbonée soumise à un prétraitement et le dispositif de mise en oeuvre du procédé.

La valorisation des charges lourdes, communément appelées résidus (résidu atmosphérique, résidu sous-vide, huiles désasphaltées, etc...), par la voie du craquage catalytique, impose au pétrolier des modifications de ses outils de raffinage.

Par exemple, un prétraitement consistant notamment à enlever le plus possible de coke et de métaux, poisons de catalyseur, est envisagé ci-dessous.

Lorsque la charge à traiter a des teneurs maximales en Carbone Conradson (CCR) et en métaux respectivement de 6-8 % et 20-30 ppm, (partie par million) l'application de procédés du type cracking en lit fluide dans une enceinte tubulaire allongée est parfaitement envisageable. Par contre, si cette charge est plus lourde (CCR > 10) et surtout si la quantité de nickel et de vanadium présente atteint plusieurs centaines de ppm, le prétraitement s'avère nécessaire, compte-tenu des performances des catalyseurs actuellement disponibles sur le marché. Plusieurs techniques de prétraitement existent, ce sont en particulier la cokéfaction retardée, la cokéfaction fluide, l'hydrotraitement, le désasphaltage, etc...

Il est connu dans le brevet US 4 243 514 de réaliser un prétraitement de la charge dans une enceinte réservée à cet effet en vaporisant la charge par mélange à des particules de solides inertes préalablement chauffées. Ces particules ont des dimensions comprises entre 20 et 150 µm (20 et 150 x 10⁻⁶m) et sont générées directement dans le régénérateur par pulvérisation de boues d'argile par exemple. Les microsphères obtenues se caractérisent par leur faible surface spécifique qui permet de limiter le taux de conversion à un bas niveau. Néanmoins, elles permettent de capter 95 % des métaux et sensiblement l'intégralité des asphaltènes contenus initialement dans la charge. Mais les effluents libérés constituant une charge satisfaisante de craquage catalytique en lit fluidisé (F.C.C.) doivent être refroidis avant d'être conduits vers une zone de craquage catalytique séparée et distincte de celle où s'est déroulé le prétraitement, afin de minimiser les risques de craquage thermique qui ne manqueraient pas de se produire en raison des longs trajets et par conséquent d'un temps de séjour important à une température élevée. Il en résulterait alors une conversion où la formation de coke serait favorisée.

Un objet de l'invention est donc de prétraiter une charge d'hydrocarbures en la soumettant à une mise en contact avec des particules de solides peu actives catalytiquement, préalablement chauffées qui assurent notamment une démétallisation poussée et une élimination substantielle du coke potentiel contenu dans la charge pendant des temps de séjour qui n'entrainent sensiblement pas de craquage thermique.

Cette technique permet de réaliser une installation intégrée où prétraitement et craquage catalytique en lit fluidisé sont réalisés dans deux zones voisines d'une même enceinte, favorisant un flash thermique de la charge en raison des coefficients de transfert importants et diminuant de ce fait les quantités de coke formées et les réactions parasites de craquage en phase gazeuse (formation d'hydrocarbures gazeux et de suies, etc...) dans la mesure où ce réacteur assure un mélange rapide et une bonne homogénéité de mélange, soit avec le solide de prétraitement, soit avec le catalyseur.

Un autre objet de l'invention est d'obtenir une conversion meilleure et plus sélective entraînant une augmentation de la fraction valorisable de la charge, puisque, notamment, le craquage catalytique proprement dit va s'effectuer en atmosphère d'hydrocarbures gazeux donneurs d'hydrogène.

Par le terme de charge, on entend des charges classiques, c'est-à-dire présentant par exemple des points d'ébullition finaux de l'ordre de 400°C, tels que des gazoles sous vide, mais aussi des huiles hydrocarbonées plus lourdes, telles que des pétroles bruts et/ou désessenciés, et des résidus de distillation atmosphérique ou de distillation sous vide ; ces charges peuvent le cas échéant avoir reçu un traitement préalable tel que, par exemple, un hydrotraitement en présence par exemple de catalyseurs de type cobalt-molybdène ou nickel-molybdène. Les charges préférées de l'invention seront celles contenant des fractions bouillant normalement jusqu'à 700°C et plus, pouvant contenir des pourcentages élevés de produits asphalténiques, et présenter une teneur en carbone Conradson allant jusqu'à 10 % et au-delà. Ces charges peuvent être diluées ou non par des coupes plus légères conventionnelles, pouvant inclure des coupes d'hydrocarbures ayant déjà subi l'opération de craquage, qui sont recyclées, comme par exemple des huiles de recyclage légères ("light cycle oils", L.C.O.) ou des huiles lourdes de recyclage ("heavy cycle oils", H.C.O.). Suivant le mode préféré de l'invention, ces charges sont préchauffées dans un domaine de température compris entre 300 et 450°C avant leur traitement.

L'invention résout les inconvénients ci-dessus, et répond aux problèmes posés en proposant un procédé de craquage catalytique dans une zone réactionnelle en lit fluide ou entraîné d'une charge hydrocarbonée renfermant des produits résiduels dans lequel la charge est soumise à au moins un prétraitement caractérisé en ce qu'une partie au moins de la charge, sous forme vaporisée, et une partie au moins des particules catalytiques circulent dans au moins une enceinte dans laquelle est établi un contact entre d'une part au moins ladite partie de la charge et d'autre part des particules de solides distinctes des particules catalytiques, lesdites particules de solides et ladite charge circulant globalement ensemble dans le même sens soit de haut en bas soit de bas en haut de ladite enceinte, à une température sensiblement égale à la température qui règne à l'entrée de la zone réactionnelle, en ce que, à l'issue d'un brassage entre au moins les particules de solides et ladite partie de la charge, ladite charge, débarrassée de la majeure partie des produits résiduels, est séparée desdites particules de solides et est envoyée avec lesdites particules catalytiques dans la zone réactionnelle.

Le procédé selon l'invention dans la mesure où le prétraitement de la charge s'effectue de manière intégrée avec le craquage catalytique proprement dit, présente l'avantage de réaliser un flash thermique de la charge réduisant substantiellement le craquage thermique et de ce fait la formation préférentielle de coke.

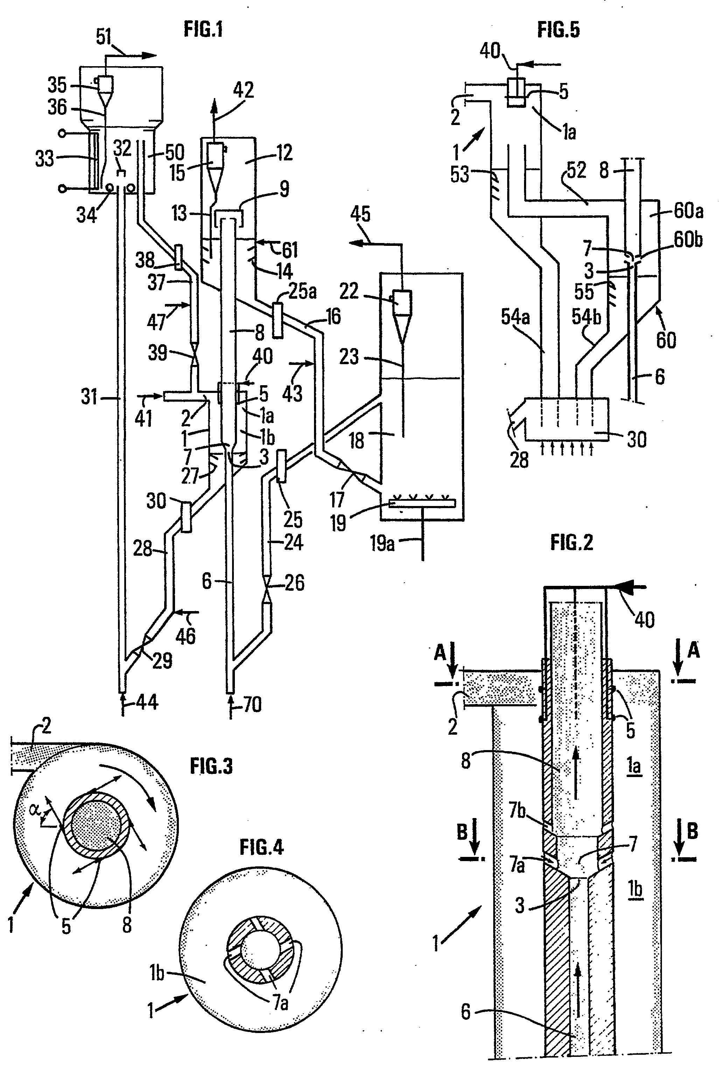

Par ailleurs, le degré de turbulence élevé inhérent à l'hydrodynamique de l'enceinte (cyclone à écoulement hélicoïdal avec ou sans retournement de la spirale ou dans certains cas, procédé mettant en oeuvre soit deux cyclones à écoulement hélicoïdal sans retournement de la spirale, soit deux cyclones à écoulement hélicoïdal (figure 5), l'un sans retournement de la spirale, l'autre avec retournement, permet d'atteindre des coefficients de transferts très importants qui favorisent le flash thermique de la charge ; ce type d'enceinte permet de contrôler et de limiter à des temps très courts le séjour des produits vaporisés, minimisant ainsi les réactions parasites de craquage. Grâce à l'intégration de la boucle de prétraitement dans l'unité de craquage catalytique, la charge vaporisée et prétraitée est mise en contact très rapidement avec le catalyseur, avent que ne se développent les réactions secondaires parasites, et à un même niveau thermique, ce qui rend le procédé économe en énergie.

La charge ainsi prétraitée par un courant de particules de solides pour enlever au moins en partie des produits résiduels tels que du coke, des métaux et du soufre est rendue acceptable pour les catalyseurs de craquage catalytique. Elle est débarrassée en effet au moins de 90 % des produits résiduels.

Il peut être avantageux d'effectuer l'étape de prétraitement en réalisant la mise en contact de la charge dans une zone de l'enceinte, sensiblement en amont (par rapport au sens d'écoulement global des particules de solides) de l'entrée de la zone réactionnelle. Cette zone réactionnelle présente une entrée débouchant à l'intérieur de cette zone, de manière préférée, sensiblement dans la partie médiane de l'enceinte ; ce prétraitement délivre des effluents débarrassés de la majeure partie des produits résiduels, à une température déterminée ; ces effluents sont envoyés ensuite à la même température dans la zone réactionnelle.

Il peut être encore plus avantageux que la zone de prétraitement se situe dans la partie de l'enceinte où arrive le courant de particules de solides, par exemple dans sa partie supérieure lorsque le courant de particules de solides débouche à ce niveau-là.

Le procédé selon l'invention comprend de préférence les étapes suivantes :
- introduire le courant de particules de solides dont la température est comprise entre 650 et 1 000°C, de diamètres variant de 50 à 2 000 µm (50 à 2000 x 10⁻⁶m) dans un courant de gaz vecteur adapté à engendrer une vitesse de particules de 10 à 80 m/s et de façon à produire dans l'enceinte un écoulement hélicoïdal desdites particules,

- injecter dans ladite enceinte, une partie au moins de la charge en la pulvérisant par des moyens de pulvérisation ou d'atomisation de façon que la vitesse de sortie de ladite charge soit comprise entre 10 et 150 m/s, dans une direction telle que l'angle d'injection du moyen de pulvérisation varie de 0 à 80° par rapport au rayon de l'enceinte passant par le moyen de pulvérisation,
- introduire également, dans ladite enceinte, une partie au moins des particules catalytiques,
- laisser en contact entre 450°C et 650°C la charge et les particules de solides avec un temps de séjour de la charge comprise entre 0,01 et 10 secondes,
- séparer des particules de solides comprenant les produits résiduels une fraction hydrocarbonée constituant les effluents de prétraitement moins riches en coke, en métaux et en soufre que la charge et,
- envoyer les effluents de prétraitement avec les particules catalytiques de craquage dans la zone réactionnelle.

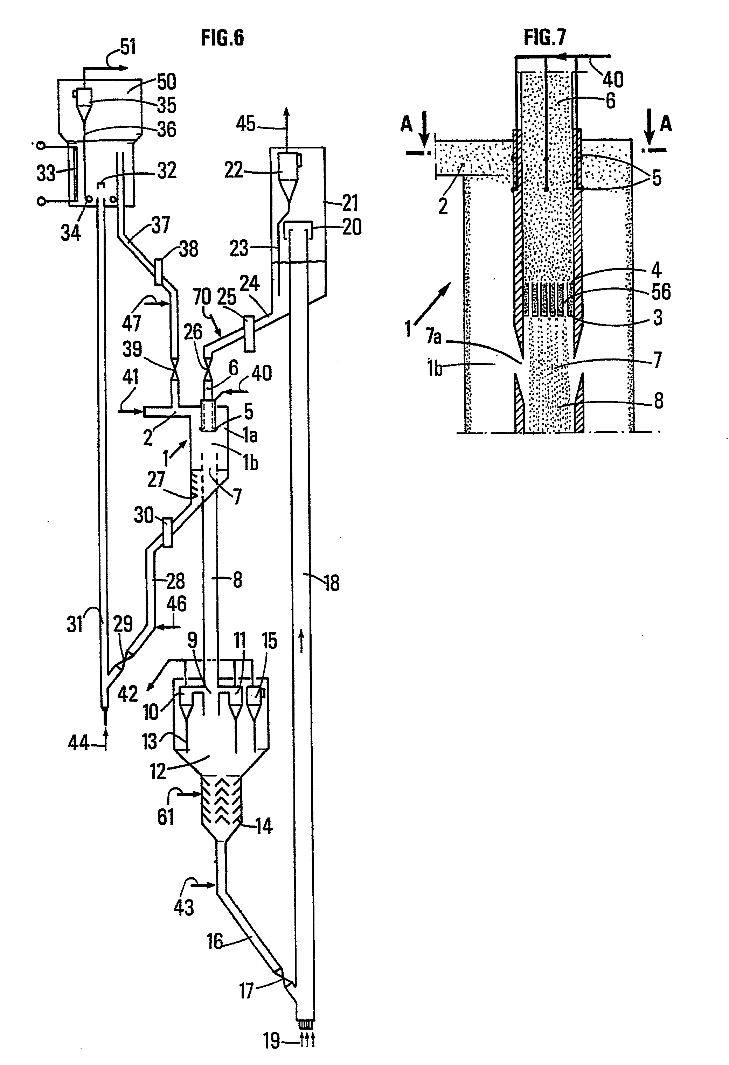

Selon un premier mode de mise en oeuvre du procédé, les particules de solides et les particules catalytiques peuvent circuler à cocourant de haut en bas ou de bas en haut ; dans le premier cas (voir figure 6 ci-après) la zone réactionnelle est adaptée à une circulation descendante du catalyseur et dans le second cas, la zone réactionnelle est adaptée à une circulation ascendante, la zone réactionnelle et la zone de mise en contact des particules solides avec le charge étant généralement à des pôles verticalement opposés de l'enceinte.

Selon un second mode de mise en oeuvre du procédé, les particules de solides et les particules catalytiques peuvent circuler à contre courant. Par exemple, (voir figure 1 ci-après), les particules solides et la charge circulent en descendant d'abord puis les effluents de prétraitement et les particules catalytiques suivent un parcours montant dans la zone réactionnelle ; ou bien les particules de solides et la charge peuvent monter dans l'enceinte tandis que les effluents de prétraitement et les particules catalytiques suivent un parcours descendant dans la zone réactionnelle. Dans les deux cas de circulation à contre courant, la zone réactionnelle et la zone de mise en contact de la charge avec les particules de solides sont généralement situées sensiblement à une même extrémité de l'enceinte.

L'utilisation de vapeur et d'hydrocarbures légers de 1 à 3 atomes de carbone comme gaz vecteur des solides de prétraitement permet de diluer les vapeurs obtenues réduisant ainsi les réactions de condensation et surtout d'opérer la vaporisation en atmosphère hydrogénante entraînant ainsi une augmentation de la fraction valorisable de la charge, donc une meilleure conversion, d'autant plus que, comme on le verra ci-dessous, la présence de dispositifs particuliers (siphons fluidisés) isole les différentes atmosphères de l'appareillage général.

Le procédé comprend au moins une étape de régénération de particules de solides en lit fluidisé ou entraîné, à une température de préférence comprise entre 500 et 1 000°C en présence d'oxygène ou d'un gaz comprenant de l'oxygène moléculaire en vue de provoquer la combustion d'au moins 90 % des produits résiduels présents sur les particules de solides, on sépare ensuite la majeure partie des gaz de combustion des particules régénérées, on recycle au moins une partie desdites particules régénérées dans l'enceinte et au moins périodiquement on retire les particules de solides contenant les métaux et provenant de l'étape de régénération sans les renvoyer dans la zone de prétraitement.

La régénération des particules de solides peut être effectuée de manière particulièrement avantageuse en au moins deux étapes, la première dans une zone tubulaire sensiblement verticale et allongée dont le rapport L/D (où L est la longueur du tube et D son diamètre) est compris entre 20 et 400 au moyen d'un gaz vecteur à base d'oxygène ou d'un gaz comprenant de l'oxygène moléculaire à une température T1 comprise entre 500°C et 900°C, suivie d'une seconde régénération dans une seconde zone de forme cylindrique au moyen d'un gaz vecteur à base d'oxygène ou d'un gaz comprenant de l'oxygène moléculaire à une température T2 comprise entre 650 et 1 000°C, T2 étant supérieur à T1.

Selon un mode préféré, on peut introduire comme particules de solides et de préférence sous forme finement divisée (diamètre < 500 μm (500 x 10⁻⁶m), par exemple de la calcite, de la dolomie ou du calcaire à la base de la première zone de régénération de façon à ce que le carbonate se décompose (perte de CO2) dans cette même zone avant la mise en contact des solides avec la charge. De cette façon, il est possible d'obtenir une meilleure désulfuration des fumées générées par l'oxydation du coke et de la charge.

Selon un autre mode de réalisation, on peut recycler au moins une partie des particules de solides, les plus fines étant rejetées afin de limiter la contamination du catalyseur. On peut également rejeter une partie des particules de solides qui seraient à la longue trop chargées en métaux et les remplacer par des particules de solides fraiches.

Selon un mode particulièrement avantageux dans la mesure où l'on souhaite renforcer l'isolement des deux populations de particules de solides et de catalyseur, ce qui limite la contamination des particules de catalyseur par les poussières des particules de solides, il est possible d'effectuer le prétraitement en deux étapes, la première dans une première enceinte où l'on met en contact une partie au moins de la charge vaporisée avec un courant de particules de solides délivrant, après séparation, un premier effluent de prétraitement comprenant la majeure partie des particules de solides chargées de résidus et un second effluent de prétraitement comprenant des particules de solides chargées de résidus restants et la majeure partie de la charge débarrassée au moins en partie des résidus, on envoie au cours d'une deuxième étape le second effluent dans une deuxième enceinte différente de la première, dans laquelle on effectue sur une partie au moins de cette dernière charge au moins un second prétraitement, de préférence identique au précédent, et on envoie après séparation desdites particules résultant du second prétraitement que l'on recueille avec celles du premier effluent, la charge prétraitée résultant de ce premier et de ce second prétraitement avec les particules catalytiques dans la zone réactionnelle.

Les particules de solides sont ensuite régénérées et recyclées selon le procédé décrit ci-dessus.

L'invention concerne aussi un appareil de craquage catalytique pour la mise en oeuvre du procédé (voir figure 1) ; il comporte :
- au moins une enceinte 1 de prétraitement du type cyclone,
- des moyens d'entrée 40,5 d'une charge liquide ou gazeuse, ces moyens comprenant des moyens du pulvérisation de ladite charge vers la périphérie interne de l'enceinte (l'écoulement résultant de la charge étant dirigé de haut en bas ou de bas en haut vers l'entrée du réacteur défini ci-dessous),
- des moyens d'entrée 3,7 (fig 2), de particules catalytiques dans ladite enceinte 1,
- des moyens d'entrée 2 de particules de solides conférant à ces particules un mouvement hélicoïdal sur les parois dans ladite enceinte dans la direction de l'écoulement résultant de la charge,
- des moyens de séparation 27 des particules de solides d'une part et de la charge prétraitée d'autre part, (et des particules catalytiques entraînées par la charge),
- des moyens de transport 28 des particules de solides connectés à ladite enceinte 1 vers un réservoir de particules de solides 50 et au moins un moyen de régénération 31 desdites particules de solides et des moyens de recyclage 37, 38, 39 des particules de solides régénérées vers l'enceinte de prétraitement 1,
- au moins un moyen d'entrée 7a du mélange de la charge prétraitée et des particules catalytiques vers l'une des extrémités d'un réacteur 8 (ou zone réactionnelle) qui est une conduite de forme allongée tubulaire et sensiblement verticale, avec circulation à co-courant de la charge prétraitée (ou effluent de prétraitement) et des particules catalytiques soit de haut en bas ("droper") soit de bas en haut ("riser"),
- des moyens par strippage (stripping) 14, 9 de séparation de l'effluent réactionnel et des particules catalytiques à l'extrémité du réacteur opposée à l'extrémité par laquelle ont été introduits la charge prétraitée et les particules catalytiques, - des moyens de sortie 15, 42 de l'effluent réactionnel reliés auxdits moyens de séparation,
- des moyens de transport 16 des particules catalytiques reliés auxdits moyens de séparation 14, 9 vers au moins un régénérateur 18 de ces particules, et
- des moyens de recyclage 24, 25, 26 des particules catalytiques au moins en partie vers ladite enceinte de prétraitement 1.

Du fait de la séparation rapide dans l'enceinte (cyclone avec des temps de contact courts (par exemple inférieurs à la seconde) les phénomènes de rétromélange et par ailleurs les phénomènes de surcraquage dont on connaît les effets néfastes au niveau de la sélectivité des réactions sont limités.

L'invention sera mieux comprise au vu des figures présentées schématiquement ci-après parmi lesquelles ;

- la figure 1 représente un mode de réalisation du procédé de craquage catalytique selon l'invention dans lequel on effectue un prétraitement de la charge, et dans lequel les particules de solides et la charge circulent globalement ensemble dans le même sens à contre-courant des particules catalytiques,

- la figure 2 montre l'enceinte dans laquelle s'effectue le prétraitement et l'admission du catalyseur dans la zone réactionnelle,

- les figures 3 et 4 illustrent en coupe transversale suivant un plan AA' et un plan BB' une vue au niveau de l'injection de la charge et des particules de solides et, une vue au niveau de l'entrée des effluents réactionnels de prétraitement dans le réacteur,

- la figure 5 montre une variante du dispositif selon l'invention.

- la figure 6 illustre un autre mode de réalisation du procédé dans lequel les particules de solides et la charge circulent globalement ensemble dans le même sens à co-courant des particules catalytiques, et

- la figure 7 représente un autre mode d'admission du catalyseur dans l'enceinte de prétraitement.

Dans la figure 1 représentant un mode de réalisation d'une boucle de prétraitement intégrée à une unité de craquage catalytique où la zone réactionnelle de craquage est adaptée à la circulation ascendante d'une charge et des particules catalytiques dans l'exemple ci-dessous, ce qui limite l'encombrement dans l'espace, une enceinte 1, ou cyclone à passage direct à écoulement hélicoïdal avec retournement de la spirale de gaz, est positionnée verticalement et alimentée dans sa partie supérieure 1-a par une suspension dans un gaz vecteur de particules de solides préalablement chauffées en provenance d'une ligne descendante 37 provenant d'un régénérateur 50 et par la charge à vaporiser arrivant par une ligne 40. La phase gazeuse constituant le gaz vecteur qui supporte les particules de solides peut être de la vapeur, si l'on souhaite abaisser la pression partielle des produits de la vaporisation, ou des hydrocarbures légers (C1 à C3 par exemple), si l'on veut réaliser l'échauffement de la charge dans une atmosphère hydrogénante, ou encore toute combinaison de ces deux catégories de gaz. Cette phase gazeuse arrive par une ligne 41, met en suspension les particules de solides par un dispositif de type venturi ou autre connu de l'homme de l'art et ces dernières débouchent par un orifice 2 dans la partie supérieure 1a du cyclone de façon à provoquer une introduction tangentielle. La charge qui peut être préalablement chauffée (entre 100 et 350°C), est introduite grâce à une ligne 40 terminée par des injecteurs 5 dont on verra la configuration particulière plus loin, qui débouchent dans la partie supérieure 1a, est mise en contact ainsi vaporisée et atomisée avec les particules de solides centrifugées à écoulement hélicoïdal vers le bas et qui sont à une température de 650 à 1 000°C. Elles captent alors la majeure partie du coke, des métaux et éventuellement du soufre. On réalise ainsi des transferts ultra rapides entre les particules de solides et la charge. Ces particules chargées sont ensuite stockées dans la partie 27 du cyclone avant d'être désorbées et régénérées plus loin.

La conduite d'arrivée 6 du catalyseur traversant la partie inférieure du cyclone 1 sensiblement le long de son axe central est aménagée en son intérieur (fig. 2) pour canaliser le catalyseur en provenance d'une zone de régénération vers la zone médiane 1b du cyclone où il est mis en contact avec la charge vaporisée et prétraitée. On s'arrange par ailleurs, pour que la pression de l'enceinte soit supérieure à la pression de la zone réactionnelle 8 de façon à limiter la présence de particules catalytiques dans l'enceinte. La différence de pression entre l'enceinte 1 et le réacteur 8 est réglée par des moyens de réglage de pression connus de l'homme de l'art et non représentés sur la figure, ces moyens étant localisés par exemple sur les conduites de sortie de régénérateur et/ou du stripper.

En effet, selon la figure 2, le catalyseur provenant du régénérateur 18 est entraîné par de la vapeur ou des hydrocarbures légers C1 à C3 introduits par un distributeur 70. Il entre ensuite par l'orifice de sortie de la conduite 6 vers l'orifice d'entrée 7 de la zone réactionnelle ou réacteur 8 dont l'extrémité inférieure est contenue dans le cyclone 1 sensiblement au niveau de la zone médiane 1b. L'entrée des effluents de prétraitement peut être aménagée sur au moins un niveau 7a et avantageusement sur au moins deux niveaux 7a, 7b du réacteur 8 afin que ces effluents soient mieux distribués sur les particules catalytiques. La conduite 6 et le réacteur 8 sont de préférence construits de telle sorte que leur diamètre externe est sensiblement le même. Suivant un mode de réalisation préféré mais non limitatif et si l'on considère le sens d'écoulement des particules catalytiques vers le haut, le diamètre interne de la conduite en aval du niveau 7a est supérieur à celui situé en amont de ce même niveau 7a et inférieur au diamètre situé en aval du niveau 7b. Cette disposition facilite la circulation à grande vitesse des particules catalytiques et limite leur échappement dans le cyclone. Elle permet d'assurer également un meilleur contact des hydrocarbures avec les particules. Selon une caractéristique avantageuse de l'invention, les ouvertures 7a, 7b sont taillées en biseau de telle sorte que les effluents conservent à l'entrée le mouvement circulaire et la grande vitesse qu'ils acquièrent dans le cyclone (figure 4) et elles sont avantageusement dirigées vers le bas pour favoriser le mélange des deux phases.

Les particules catalytiques sont alors entraînées par les vapeurs d'hydrocarbures qui pénètrent dans la zone réactionnelle à grande vitesse, ce qui favorise la mise en contact rapide et homogène des vapeurs avec le catalyseur.

Pour augmenter encore la rétention en catalyseur, et donc diminuer le volume réactionnel total, le réacteur 8 peut être garni intérieurement de chicanes ou garnissage (non représentés), tels que anneaux de Ras, selles de Berl, selles Intalox, etc...

Après mélange, la température atteinte par la suspension vapeur d'hydrocarbures/catalyseur peut varier dans la gamme des températures allant environ de 450°C à 650°C en fonction du degré de conversion désiré et de la composition de la charge. La suspension vapeur d'hydrocarbures/ catalyseur s'écoule ensuite dans le sens vertical ascendant à travers le réacteur 8.

Le temps de séjour de la charge hydrocarbonée dans l'enceinte 1 est d'environ 0,01 seconde à environ 10 secondes, et préférentiellement d'environ 0,2 seconde à 4 secondes.

Le temps de contact des effluents réactionnels de prétraitement et du catalyseur n'excède généralement pas 4 secondes et reste préférentiellement inférieur à 2 secondes.

Un séparateur balistique 9 et au moins un cyclone 15 permettent de séparer la plus grande partie des produits de craquage du catalyseur.

Une enceinte de strippage (stripping) 12 assure une fonction de stockage du catalyseur. Les jambes de cyclones 13 plongent dans le lit de catalyseur afin d'assurer l'équilibrage des pressions. La base 14 de cette enceinte est équipée de moyens de séparation des produits restant fixés sur le catalyseur grâce à la vapeur qui arrive par la ligne 61. Les vapeurs d'hydrocarbures en résultant quittent l'enceinte 12 par une ligne de sortie 42 après passage dans le cyclone 15. Le catalyseur est ensuite dirigé vers le régénérateur 18 par l'intermédiaire d'une ligne 16 qui est constamment maintenue à l'état fluidisé par des injections appropriées de gaz de fluidisation 43.

La description suivante de la régénération du catalyseur est donnée à titre d'exemple mais n'illustre qu'une des nombreuses possibilités de régénération des catalyseurs de craquage.

L'air nécessaire à l'oxydation du coke présent sur le catalyseur est délivré par le distributeur 19 alimenté par la ligne 19a.

Au moins un cyclone 22 de dépoussiérage assure notamment l'évacuation des gaz de combustion 45 qui résultent de la régénération du catalyseur. Comme pour les autres cyclones, la jambe 23 du cyclone 22 plonge dans le lit de particules du catalyseur régénéré afin d'assurer l'équilibrage des pressions. L'enceinte de régénération 18 alimente une jambe 24, qui est munie d'un siphon 25 fluidisé à la vapeur permettant une isolation pneumatique entre l'enceinte 1 à atmosphère réductrice et l'enceinte 18 à atmosphère oxydante. Ce siphon fluidisé permet également de stopper l'écoulement des solides par arrêt de la fluidisation lors des phases de disfonctionnement de l'installation.

Une vanne de réglage du débit de catalyseur 26 placée dans la partie basse de la ligne 24 peut être asservie à un détecteur de niveau de particules catalytiques placé dans l'enceinte 18 ou peut être contrôlée par toute autre variable du procédé. Elle régule également le débit d'entrée de particules catalytiques dans le cyclone 1. La boucle de craquage catalytique et de régénération du catalyseur est alors réalisée.

La boucle de prétraitement peut être achevée de la façon suivante (figure 1). Après mise en contact des particules de solides avec la charge selon le procédé de l'invention, ces particules chargées notamment de résidus (coke, métaux, soufre) peuvent être soumises à un traitement à la vapeur (strippage) dans un dispositif de séparation 27 situé dans la partie basse du cyclone 1 et destiné à désorber aussi les hydrocarbures piégés sur les particules de solides. À la partie basse du cyclone 1 est reliée une ligne 28 équipée d'un siphon fluidisé 30 dont le rôle est de séparer les atmosphères réductrice du cyclone 1 et oxydante de la colonne 31 et d'une vanne de débit de particules de solides 29 qui peut être asservie au niveau de ces particules de solides dans le cyclone 1.

Une colonne ascendante 31 permet de réaliser grâce à une alimentation en air 44, à sa base une partie de la combustion du coke déposé sur les solides. Ces solides peuvent être de la calcite, de la dolomie ou des calcaires si l'on souhaite désulfurer les fumées générées par l'oxydation du coke. Le calcaire peut être introduit selon un mode préférentiel à la base de la colonne ascendante 31 de façon à ce que la majeure partie du gaz carbonique de décomposition se dégage lors de la première régénération des particules de solides dans la colonne 31. A cet effet, il se présente sous forme finement divisée (diamètre inférieur à 500 μm (500 x $10^{-6}$ m)). La décarbonatation est achevée dans l'enceinte 50, où aboutit la colonne 31, de façon à réaliser une décarbonatation sensiblement complète avant la mise en contact avec la charge dans le cyclone 1. Cet état de l'agent de désulfuration permet également d'assurer une capture efficace du soufre sans faire appel à des rapports Ca/S rédhibitoires. Le haut 32 de la colonne 31 a une géométrie qui permet une bonne répartition des particules de solides dans le lit fluidisé.

L'enceinte 50 dans laquelle se poursuit la combustion du coke en lit fluidisé est alimenté par de l'air de fluidisation délivré par le dispositif annulaire 34 et qui vient en complément à celui délivré en 44.

La répartition de l'air total nécessaire à l'oxydation du coke entre la colonne et le lit fluidisé dense est asservie à la température de la colonne qui doit être maintenue préférentiellement aux environs de 800°C.

L'enceinte 50 peut être équipée d'au moins un tube échangeur 33 selon une technique décrite dans le brevet FR 2 575 546 relatif aux échangeurs à lit fluidisé compartimenté, de façon à régler la température de sortie des particules de solides chaudes. Elle assure également une fonction de stockage. Les fumées de combustion quittent le régénérateur 50 par une ligne 51 après être passées dans le cyclone 35 dont la jambe 36 plonge dans le lit fluidisé.

Les solides régénérés sont repris par une ligne 37 munie, comme les autres lignes, d'un siphon fluidisé 38 isolant l'atmosphère oxydante du régénérateur 50 de celle réductrice du cyclone 1 et d'une vanne sur solides 39 contrôlant le débit de particules de solides débouchant dans le cyclone 1.

Pour entretenir la fluidisation aussi bien des particules de solides que du catalyseur, au moins une arrivée de vapeur de fluidisation peut être introduite sur les diverses lignes, par exemple, par la ligne 43 sur la ligne 16, la ligne 46 sur la ligne 28 et par la ligne 47 sur la ligne 37.

La figure 2 montre une vue plus détaillée du cyclone 1 au niveau de la zone haute ou supérieure 1a du prétraitement et de la zone médiane 1b de canalisation du catalyseur.

La charge arrivant par la ligne 40 est divisée et injectée grâce à au moins un niveau d'injecteurs 5 de pulvérisation et d'atomisation connus de l'homme de l'art disposés sur la paroi externe de la zone réactionnelle 8, par exemple cylindrique. Ces injecteurs peuvent être disposés suivant un cercle perpendiculaire à l'axe de la conduite ou suivant une hélice. Ces injecteurs sont placés de façon à répartir la charge à vaporiser aussi uniformément que possible sur les solides chauds entrant dans le cyclone et qui circulent à grande vitesse suivant sa périphérie. La taille des gouttelettes est généralement comprise entre 10 et 300 µm (10 et 300 x $10^{-6}$ m). La vitesse d'entrée dans le cyclone et la vitesse d'éjection de la charge sont réglées de telle façon que les gouttelettes soient sensiblement vaporisées avant qu'elles ne viennent percuter les solides chauds tapissant la paroi. Comme le montre la figure 3, les injecteurs peuvent être disposés dans la partie haute 1a du cyclone 1, de façon à envoyer la charge avantageusement dans le sens d'écoulement de la spirale sous un angle d'environ 0 à 80° par rapport au rayon du tube passant par l'injecteur et de préférence sous un angle d'environ 30 à 60°, à une vitesse variant généralement de 10 à 150 m/s, de préférence 30 à 80 m/s vers les particules de solides qui débouchent tangentiellement dans le cyclone 1 à une vitesse en général de 10 à 80 m/s, préférentiellement 20 à 40 m/s.

Selon la figure 5 illustrant un autre mode de réalisation, le procédé de prétraitement peut être réalisé dans deux cyclones, l'un de ces cyclones étant 1 comme ci-dessus et l'autre étant 60. Lesdites particules de solides arrivent par la ligne 2 dans le premier cyclone qui reçoit selon le procédé de l'invention et comme décrit ci-dessus, la charge par la ligne 40 et les injecteurs 5. Une partie des solides ayant absorbé les résidus polluants (métaux, coke) passe par des moyens de séparation 53 à la vapeur pour désorber les hydrocarbures. Ceux-ci sont évacués par une ligne 52 avec l'autre partie des particules de solides et avec la charge débarrassée d'une partie de ses résidus polluants. Cette ligne 52 aboutit dans la partie sensiblement médiane du cyclone 1. Les solides chargés de résidus polluants quittent le cyclone 1 par la partie basse grâce à une jambe 54a qui rejoint un siphon fluidisé 30. Les effluents du premier cyclone débouchent par le conduit 52 dans un second cyclone 60 à écoulement hélocoïdal avec retournement de la spirale à une vitesse de, par exemple, 20 à 100 m/s et le prétraitement selon l'invention se poursuit dans la partie haute 60a de ce cyclone 60. La charge débarrassée de la majeure partie des métaux, du coke et du soufre à laquelle sont ajoutés des hydrocarbures piégés aux particules de solides et qui ont été désorbés grâce à des seconds moyens de séparation à la vapeur 55 est mise en contact avec le catalyseur qui arrive de façon ascendante par la ligne 6 dans la partie médiane 60b à une vitesse sensiblement comparable à celle décrite selon le premier mode de réalisation. Sensiblement à ce même niveau débouche le réacteur ou zone réactionnelle 8 de craquage qui est ascendant selon ce mode de réalisation illustré par la figure 5. Les particules de solides chargés de résidus polluants quittent le deuxième cyclone par une jambe 54b qui aboutit au siphon fluidisé 30 auquel aboutit aussi la jambe 54a, puis sont dirigés par la jambe 28 vers la zone de régénération des particules de solides 31 et 50.

Selon un autre mode de réalisation, non représenté sur la figure 5, le réacteur 8 pourrait être descendant, le cyclone 60 étant alors à écoulement hélicoïdal sans retournement de la spirale et l'alimentation en catalyseur par la ligne 6 étant aussi descendante.

Cette disposition en cascade de deux cyclones améliore la séparation entre les deux populations de particules, les solides de prétraitement d'une part et le catalyseur de craquage d'autre part. Elle limite également la contamination du catalyseur par les poussières de l'agent de prétraitement.

Selon un autre mode de réalisation, on peut ne pas recycler les particules les plus fines afin de limiter encore une fois la contamination du catalyseur. Dans ces conditions, on peut placer les cyclones du régénérateur de particules de solides à l'extérieur de l'enceinte de régénération de ces particules afin d'éliminer une partie de celles-ci qui ont été captées. Cette solution est d'autant plus envisageable que l'agent de démétallisation, de décokage et/ou de désulfuration est bon marché.

La figure 6 montre à titre illustratif un autre mode de réalisation d'une bouche de prétraitement identique à celle de la figure 1 intégrée à une unité de craquage catalytique où la zone réactionnelle de craquage 8 est descendante. Les particules de solides et la charge circulent dans l'enceinte globalement ensemble dans le même sens à co-courant du catalyseur de haut en bas.

Le cyclone 1 est, dans ce cas, de type Uniflow à passage direct, à écoulement hélicoïdal sans retournement de la spirale de gaz. On a représenté sur cette figure 6 les mêmes organes de la figure 5 avec les mêmes références ; En outre, l'enceinte de strippage 14 où débouche le réacteur 8 montre schématiquement et à titre illustratif deux cyclones 10 et 11 associés au séparateur balistique 9 permettant la séparation du catalyseur qui est évacué par la ligne 42.

La régénération des particules catalytiques est illustrée à titre d'exemple dans cette figure 6 de la façon suivante :

Une colonne ascendante 18 assure une première régénération du catalyseur et son relevage jusque dans l'enceinte 21 de stockage et de régénération. Cette enceinte enveloppe un séparateur balistique 20 en sortie de colonne 18 et au moins un cyclone 22 de dépoussièrage assure, notamment l'évacuation des gaz de combustion 45 résultant de la régénération du catalyseur. La jambe 23 du cyclone 22 plonge dans le lit de particules du catalyseur régénéré afin d'assurer l'équilibrage des pressions. L'enceinte 21 alimente une jambe 24, qui est munie d'un siphon 25 fluidisé à la vapeur permettant une isolation pneumatique entre l'enceinte 1 à atmosphère réductrice et l'enceinte 21 à atmosphère oxydante. Ce siphon fluidisé permet également de stopper l'écoulement des particules de solides par arrêt de la fluidisation lors des phases de disfonctionnement de l'installation.

Une vanne de réglage du débit de catalyseur 26 placée dans la partie basse de la jambe 24 peut être asservie à un détecteur de niveau de particules catalytiques placé dans l'enceinte 21 ou peut être contrôlée par toute autre variable du procédé. Elle régule également le débit d'entrée de particules dans le cyclone Uniflow 1.

On a représenté sur la figure 7 un autre mode d'admission du catalyseur dans l'enceinte de prétraitement 1, qui peut s'appliquer au même titre que pour le système représenté par la figure 2 indifféremment sur les boucles de prétraitement et de craquage illustrés par les figures 1 et 6, c'est-à-dire dans des cyclones avec ou sans retournement de la spirale avec un réacteur 8 ascendant ou descendant.

Selon la figure 7, la conduite d'arrivée 6 du catalyseur traversant la partie supérieure du cyclone 1 sensiblement le long de son axe central est aménagée en son intérieur pour canaliser le catalyseur régénéré vers la zone médiane 1b du cyclone où il est mis en contact avec la charge vaporisée et prétraitée. En effet, le catalyseur provenant du régénérateur tombe dans un lit 4 fluidisé par de la vapeur ou des hydrocarbures légers (C1 à C3) introduits par des distributeurs (sparged-tubes) 3. Il entre ensuite par débordement dans des goulottes 56 réparties uniformément sur la section du lit fluidisé, qui dirigent les particules catalytiques et la vapeur d'hydrocarbures vers l'orifice d'entrée 7 de la zone réactionnelle 8 dont l'extrémité supérieure est contenue dans le cyclone 1 sensiblement au niveau de la zone 1b.

L'orifice d'entrée 7a du réacteur 8 et l'orifice de sortie de la conduite de catalyseur 6 ont préférentiellement une forme biseautée permettant une entrée à grande vitesse de vapeurs d'hydrocarbures sensiblement tangentielle à l'écoulement du catalyseur. Cette disposition évite en majeure partie la dispersion du catalyseur à l'extérieur de la zone réactionnelle. De plus, les particules catalytiques s'écoulant par gravité des goulottes sont accélérées par les vapeurs d'hydrocarbures qui pénètrent dans la zone réactionnelle à grande vitesse, ce qui favorise la mise en contact rapide et homogène des vapeurs avec le catalyseur.

La charge hydrocarbonée liquide, un gazole ou des hydrocarbures à point d'ébullition plus élevé, préchauffée en amont (par un système non représenté), peut être introduite avec une certaine quantité de vapeur de dispersion pour réduire la pression partielle des composants volatils de la charge.

Les particules de solides de prétraitement peuvent présenter en général une surface spécifique inférieure à 100 m²/g (méthode dite BET en utilisant l'absorption d'azote), préférentiellement inférieure à 50 m²/g et de manière encore plus préférée, inférieure à 30 m²/g. Elles ont une taille de préférence variant de 50 à 2 000 µm (50 à 2000 x 10⁻⁶ m) et plus particulièrement de 100 à 300 µm (100 à 300 x 10⁻⁶ m). Ces microsphères ont une activité catalytique faible (inférieure par exemple à environ 10%, la valeur 100% correspondant arbitrairement à l'activité moyenne habituelle d'un catalyseur de craquage) et sont d'un coût faible. Il est donc recommandé d'en rejeter une partie de temps en temps et de les remplacer par une même quantité plus fraîche, de façon à maintenir une teneur en métal acceptable. En effet, leur analyse montre qu'elles contiennent, en plus de minéraux, de la silice, de l'alumine et de faibles quantités d'impuretés sous forme de titane, fer et d'alcalino-terreux. Les particules de solides employées sont par exemple décrites dans le brevet US 4 243 514 et sont par exemple de la calcite, de la dolomie, du calcaire, de la bauxite, de la baryte, de la chromite, de la zircone, de la magnésie, de la perlite, de l'alumine et de la silice de faible surface spécifique, etc...

Les catalyseurs sont ceux généralement utilisés dans les réactions de craquage ; on utilise de préférence les catalyseurs à base de zéolites de surface spécifique généralement supérieure à 100m²/g (méthode BET) et parmi ceux-ci, ceux qui présentent une bonne stabilité thermique en présence de vapeur d'eau.

**Revendications**

1) Procédé de craquage catalytique dans une zone réactionnelle en lit fluide ou entraîne d'une charge hydrocarbonée renfermant des produits résiduels dans lequel la charge est soumise à au moins un prétraitement caractérisé en ce qu'une partie au moins de ladite charge sous forme vaporisée et une partie au moins des particules catalytiques circulent dans au moins une enceinte dans laquelle est établi un contact entre d'une part au moins ladite partie de la charge et d'autre part des particules de solides (catalytiquement peu actives) distinctes des particules catalytiques, lesdites particules de solides et ladite charge circulant globalement ensemble dans le même sens, soit de haut en bas, soit de bas en haut de ladite enceinte, à une température sensiblement égale à la température qui règne à l'entrée de la zone réactionnelle, en ce que, à l'issue d'un brassage entre au moins les particules de solides et ladite partie de la charge, ladite charge, débarrassée de la majeure partie des produits résiduels, est séparée desdites particules de solides et est envoyée avec lesdites particules catalytiques dans la zone réactionnelle.

2) Procédé selon la revendication 1 dans lequel la zone réactionnelle présente une entrée débouchant à l'intérieur de ladite enceinte et dans lequel ledit prétraitement est effectué dans une zone de ladite enceinte située sensiblement en amont de l'entrée de ladite zone réactionnelle.

3) Procédé selon l'une quelconque des revendications 1 à 2 dans lequel ledit prétraitement comprend les étapes suivantes :
- introduire le courant de particules de solides dont la température est comprise entre 650 et 1 000°C, de diamètre variant de 50 µm à 2000 µm (50 à 2000 x 10⁻⁶ m) dans un courant de gaz vecteur adapté à engendrer une vitesse de particules de 10 à 80 m/s et de façon à produire un écoulement hélicoïdal des particules de solides,

- injecter dans ladite enceinte une partie au moins de la charge en la pulvérisant par des moyens de pulvérisation ou d'atomisation de façon que la vitesse de sortie de la charge soit comprise entre 10 et 150 m/s, dans une direction telle que l'angle d'injection du moyen de pulvérisation varie de 0 à 80° par rapport au rayon de l'enceinte passant par les moyens de pulvérisation,

- introduire également dans ladite enceinte une partie au moins des particules catalytiques,

- laisser en contact entre 450°C et 650°C la charge et les particules de solides avec un temps de séjour de la charge comprise entre 0,01 et 10 secondes,

- séparer des particules de solides comprenant les produits résiduels une fraction hydrocarbonée constituant les effluents de prétraitement moins riches en coke, en métaux et en soufre que la charge, et

- envoyer lesdits effluents de prétraitement avec les particules catalytiques de craquage dans ladite zone réactionnelle.

4) Procédé selon l'une quelconque des revendications 1 à 3, caractérisé en ce qu'on effectue au moins une régénération des particules de solides ainsi séparées, en lit fluidisé, à une température comprise entre 500°C et 1 000°C en présence d'oxygène ou d'un gaz comprenant de l'oxygène moléculaire en vue de provoquer la combustion d'au moins 90 % des produits résiduels présents sur les particules de solides, on sépare la majeure partie des gaz de combustion des particules régénérées, on recycle au moins une partie desdites particules régénérées, dans l'enceinte et au moins périodiquement on retire les particules de solides contenant les métaux et provenant de l'étape de régénération sans les renvoyer dans la zone de prétraitement.

5) Procédé selon la revendication 4, caractérisé en ce qu'on effectue ladite régénération en au moins deux étapes, la première dans une zone tubulaire sensiblement verticale et allongée dont le rapport L/D (où L est la longueur du tube et D son diamètre) est compris entre 20 et 400 au moyen d'un gaz vecteur à base d'oxygène ou d'un gaz comprenant de l'oxygène moléculaire à une température T1 comprise entre 500°C et 900°C, suivie d'une seconde régénération dans une seconde zone au moyen d'un gaz vecteur à base d'oxygène ou d'un gaz comprenant de l'oxygène moléculaire à une température T2 comprise entre 650°C et 1000°C, T2 étant supérieur à T1.

6) Procédé selon l'une quelconque des revendications 1 à 5, dans lequel les particules de solides sont choisies dans le groupe formé par la calcite, la dolomie, le calcaire, la bauxite, la baryte, la chromite, la magnésie, la perlite, l'alumine et la silice de faible surface spécifique.

7) Procédé selon la revendication 3 dans lequel le gaz vecteur est de la vapeur ou des hydrocarbures de 1 à 3 atomes de carbone.

8) Procédé selon l'une quelconque des revendications 1 à 7 dans lequel le prétraitement est effectué en deux étapes, la première dans une première enceinte où l'on met en contact une partie au moins de la charge vaporisée avec un courant fluidisé de particules de solides délivrant après séparation un premier effluent de prétraitement comprenant la majeure partie des particules de solides chargées de résidus et un second effluent de prétraitement comprenant des particules de solides chargées de résidus restants et la majeure partie de la charge débarrassée au moins en partie des résidus, on envoie au cours d'une deuxième étape le second effluent dans une deuxième enceinte différente de la première, dans laquelle on effectue sur une partie au moins de ladite charge au moins un second prétraitement et on envoie, après séparation desdites particules résultant du second prétraitement que l'on recueille avec celles du premier effluent, la charge prétraitée résultant de ce premier et de ce second prétraitement avec les particules catalytiques dans la zone réactionnelle.

9) Procédé selon l'une quelconque des revendications 1 à 8, dans lequel lesdites particules de solides et ladite charge circulent globalement ensemble à co-courant des particules catalytiques.

10) Procédé selon l'une quelconque des revendications 1 à 8, dans lequel lesdites particules de solides et ladite charge circulent globalement ensemble à contre-courant des particules catalytiques.

11) Appareil de craquage catalytique pour la mise en oeuvre du procédé selon la revendication 1 comportant (figure 1) :

- au moins une enceinte de prétraitement d'une charge hydrocarbonée du type cyclone (1),

- des moyens d'entrée (40, 5) d'une charge liquide ou gazeuse contenant des moyens de pulvérisation de ladite charge vers la périphérie interne de l'enceinte (l'écoulement résultant de la charge étant dirigé de haut en bas ou de bas en haut vers l'entrée du réacteur (8) défini ci-dessous),

- des moyens d'entrée (3 et 7 fig 2,) de particules catalytiques dans ladite enceinte (1),

- des moyens d'entrée (2) de particules de solides conférant à ces particules un mouvement hélicoïdal sur les parois dans ladite enceinte dans la direction de l'écoulement résultant de la charge,

- des moyens de séparation (27) des particules de solides d'une part et du mélange des particules catalytiques et de la charge prétraitée d'autre part,

- des moyens de transport (28) des particules de solides connectées à ladite enceinte (1) vers un réservoir de particules de solides (50) et au moins un moyen de régénération (31) desdites particules de solides et des moyens de recyclage (38, 39) des particules de solides régénérées vers l'enceinte de prétraitement (1),

- au moins un moyen d'entrée (7a) du mélange de la charge prétraitée et des particules catalytiques dans un réacteur (8) qui est une conduite de forme allongée tubulaire et sensiblement verticale, avec circulation à co-courant de la charge prétraitée et des particules catalytiques soit de haut en bas ("droper") soit de bas en haut ("riser"),

- des moyens par strippage (stripping) de séparation (14, 9) de l'effluent réactionnel et des particules catalytiques, à l'extrémité du réacteur opposée à l'extrémité par laquelle ont été introduits la charge prétraitée et les particules catalytiques,

- des moyens de sortie (42, 15) de l'effluent réactionnel relié auxdits moyens de séparation,
- des moyens de transport (16) des particules catalytiques reliés auxdits moyens de séparation (14, 9) vers au moins un régénérateur (18) de ces particules et,
- des moyens de recyclage (24,25, 26) des particules catalytiques au moins en partie vers ladite enceinte de prétraitement (1).

12) Appareil selon la revendication 11 dans lequel ledit moyen de régénération des particules de solides comprend :
- une première enceinte de régénération (31) de forme allongée tubulaire et sensiblement verticale connectée auxdits moyens de transport des particules de solides,
- des premiers moyens d'alimentation (44) en gaz comburant ($O_2$, air) à la base de ladite enceinte de régénération (31), adaptés à fluidiser les particules de solides et à provoquer au moins en partie la combustion des résidus chargés sur lesdites particules,
- une seconde enceinte de régénération (50) de forme circulaire alimentée par des seconds moyens d'alimentation (34) en gaz comburant à la base de cette seconde enceinte et reliée à ladite première enceinte (31) d'une part et auxdits moyens de recyclage d'autre part (38, 39), cette seconde enceinte étant adaptée à poursuivre la combustion des résidus restants,
- au moins un échangeur d'énergie (33) dans ladite seconde enceinte (50) de régénération, et
- des moyens de séparation (35, 51) des fumées résultant de ladite combustion.

13) Appareil selon l'une quelconque des revendications 11 à 12 dans lequel les moyens de recyclage des particules de solides comprennent un siphon fluidisé (38) relié audit réservoir de particules de solides (50) et une vanne (39) interposée entre ledit siphon (38) et l'enceinte de prétraitement (1).

14) Appareil selon l'une quelconque des revendications 11 à 13 dans lequel les moyens de recyclage des particules catalytiques comprennent un siphon fluidisé (25) interposé entre ledit régénérateur (18) et une vanne (26) d'écoulement vers l'enceinte (1), ladite vanne étant asservie à un détecteur de niveau de particules catalytiques dans le régénérateur (18).

15) Appareil selon l'une quelconque des revendications 11 à 14 comportant (voir figure 5) :
- une première enceinte de prétraitement (1) du type cyclone à passage direct sans retournement de la spirale,
- des moyens d'entrée (40, 5) d'une charge liquide ou gazeuse contenant des moyens de pulvérisation (5) de ladite charge vers la périphérie interne de l'enceinte, l'écoulement résultant de la charge étant dirigé de haut en bas,
- des moyens d'entrée des particules de solides (2, 41, fig 1) conférant à ces particules un mouvement hélicoïdal sur les parois dans ladite enceinte dans la direction de l'écoulement résultant de la charge,
- des premiers moyens de séparation (53) des particules de solides chargées au moins en partie des résidus résultant du passage dans la première enceinte (1) d'une part et du premier mélange des particules de solides chargées au moins en partie de résidus et de la charge prétraitée d'autre part,
- des moyens de transport (52) desdites particules de solides chargées de résidus et dudit mélange,
- une seconde enceinte de type cyclone (60) à écoulement hélicoïdal avec ou sans retournement de la spirale connectée auxdits moyens de transport du mélange (52),
- des moyens d'entrée (3, 7) des particules catalytiques dans ladite seconde enceinte (60),
- des seconds moyens de séparation (55) des particules de solides d'une part et d'un second mélange des particules catalytiques et de la charge prétraitée résultant du passage dans la seconde enceinte (60) d'autre part,
- des moyens d'entrée (7a, 7b) (figure 2) du second mélange dans le réacteur 8 qui est une conduite de forme allongée, tubulaire et sensiblement verticale, et
- des moyens de transports (54a, 54b) vers l'enceinte de régénération (31) reliés auxdits premiers et seconds moyens de séparation (53, 55).

16) Appareil selon l'une quelconque des revendications 11 à 15 dans lequel les moyens d'entrée (2) des particules de solides sont situés dans la partie supérieure (1a) de l'enceinte de prétraitement et dans lequel le réacteur (8) est adapté à la circulation ascendante d'une charge prétraitée et des particules catalytiques.

17) Appareil selon l'une quelconque des revendications 11 à 15 dans lequel les moyens d'entrée (2) des particules de solides sont situés dans la partie supérieure (1a) de l'enceinte de prétraitement et dans lequel le réacteur (8) est adapté à la circulation descendante d'une charge prétraitée et des particules catalytiques.

**Claims**

1. A process for the catalytic cracking, in a reaction zone with fluid or moving bed, of a hydrocarbon charge containing residual products, wherein the charge is subjected to at least one pretreatment, characterized in that at least a portion of said charge, in vaporized form, and at least a portion of the catalyst particles, circulate in at least one enclosure wherein at least said part of the charge is contacted with solid particles (of low catalytic activity) distinct from the catalyst particles, said solid particles and said charge circulating, as a whole, in the same direction, either downwardly or upwardly, in said enclosure, at a temperature substantially equal to the temperature prevailing at the input of the reaction zone, and in that, after stirring of the solid particles with said part of the charge, said charge, free of the major part of the residual products, is separated from said solid particles and fed with said catalyst particles to the reaction zone.

2. A process according to claim 1, wherein the reaction zone has an input opening inside said enclosure and wherein said pretreatment is performed in a zone of said enclosure substantially upstream said reaction zone input.

3. A process according to anyone of claims 1 and 2, wherein said pretreatment comprises the following steps of:

– introducing the flow of solid particles of a diameter varying from 50 μm to 2000 μm, at a temperature ranging from 650 to 1000°C, in a stream of gas carrier adapted to impart to the particles a velocity of 10 to 80 m/s, so as to produce the helical flow of the solid particles,
– injecting in said enclosure at least a portion of the charge by spraying or atomization means, so that the charge output velocity be from 10 to 150 m/s, in such a direction that the injection angle of the spraying means varies from 0 to 80° with respect to the radius of the enclosure passing through said spraying means,
– also introducing in said enclosure at least a portion of the catalyst particles,
– contacting the charge with the solid particles, at a temperature from 450°C to 650°C, for a residence time of the charge ranging from 0.01 to 10 seconds,
– separating from the solid particles comprising residual products, a hydrocarbon fraction forming the pretreatment effluent of lower coke, metals and sulfur content than the charge, and
– feeding said pretreatment effluent with the cracking catalyst particles into said reaction zone.

4. A process according to any one of claims 1 to 3, characterized by at least one step of regenerating of the so-separated solid particles, in fluidized bed, at a temperature from 500 to 1000°C, in the presence of oxygen or of a molecular oxygen-containing gas in order to produce the combustion of at least 90% of the residual products present on the solid particles, separating the major part of the combustion gas from the regenerated particles, recycling at least a portion of said regenerated particles to the enclosure and, at least periodically, withdrawing the metals-containing solid particles originating from the regeneration step, without feeding them back to the pretreatment zone.

5. A process according to claim 4, characterized in that said regeneration is conducted in a least two steps, the first step in a substantially vertical and elongate tubular zone whose ratio L/d (L being the tube length and D its diameter) ranges from 20 to 400, by means of a gas carrier essentially consisting of oxygen or of a molecular oxygen-containing gas, at a temperature T1 ranging from 500 to 900°C, followed with a second regeneration step in a second zone by means of a gas carrier essentially consisting of oxygen or molecular oxygen-containing gas, at a temperature T2 ranging from 650°C to 1000°C, T2 being higher than T1.

6. A process according to any one of claims 1 to 5, wherein the solid particles are selected from the group consisting of calcite, dolomite, limestone, bauxite, barium hydroxide, chromite, magnesia, perlite, alumina and silica of low specific surface.

7. A process according to claim 3, wherein the gas carrier is steam or hydrocarbons having 1 to 3 carbon atoms.

8. A process according to any one of claims 1 to 7, wherein the pretreatment is performed in two steps, the first step being conducted in a first enclosure where at least a portion of the vaporized charge is contacted with a stream of fluidized solid particles, giving, after separation, a first pretreatment effluent comprising the major part of the solid particles charged with residues and a second pretreatment effluent comprising solid particles charged with remaining residues and the major part of the charge free of at least a part of the residues, the second step comprising feeding said second effluent to a second enclosure different from the first one, wherein at least one second pretreatment is performed on at least one part of said charge and, after separation of said particles resulting from the second pretreatment, which are recovered with those of the first effluent, the pretreated charge from these first and second pretreatments is fed with the catalyst particles to the reaction zone.

9. A process according to any one of claims 1 to 8, wherein said solid particles and said charge circulate, as a whole, cocurrently with the catalyst particles.

10. A process according to any one of claims 1 to 8, wherein said solid particles and said charge circulate, as a whole, countercurrently with the catalyst particles.

11. A catalytic cracking apparatus for carrying out the process according to claim 1, comprising (figure 1):
– at least one enclosure for the pretreatment of a hydrocarbon charge, of the cyclone type (1),
– inlet means (40, 5) for a liquid or gaseous charge containing means for spraying said charge towards the inner periphery of the enclosure (the charge resultant flow being directed downwardly or upwardly towards the inlet of reactor (8), hereinafter defined),
– inlet means (3 and 7, figure 2) for catalyst particles in said enclosure (1),
– inlet means (2) for solid particles, imparting to said particles a helical motion along the walls of said enclosure in the direction of flow resulting from the charge,
– means (27) for separating the solid particles, from the mixture of catalyst particles with the pretreated charge,
– means (28), connected to said enclosure (1), for conveying solid particles towards a tank for solid particles (50) and at least one means (31) for regenerating said solid particles and means (38, 39) for recycling regenerated solid particles towards the pretreatment enclosure(1),
– at least one means (7a) for feeding the mixture of pretreated charge with catalyst particles to reactor (8) which comprises a substantially vertical elongate tube, with co-current circulation of the pretreated charge and of the catalyst particles, either downwardly (droper) or upwardly (riser),
– stripping means (14, 9) for separating the reaction effluent from the catalyst particles, provided at that end of the reactor opposite to the end of introduction of the pretreated charge and of the catalyst particles,
– outlet means (42, 15) for the reaction effluent, connected to said stripping means,
– means (16) connected to said stripping means (14, 9), for conveying catalyst particles towards at least one regenerator (18) for said particles, and

– means (24, 25, 26) for recycling catalyst particles at least partly towards said pretreatment enclosure (1).

12. An apparatus according to claim 11, wherein said means for regenerating solid particles comprises:
– a first regeneration enclosure (31), of tubular elongate shape and substantially vertical, connected to said means for conveying solid particles,
– a first means (44) for feeding the bottom of the regeneration enclosure (31) with a combustion-sustaining gas ($O_2$, air) adapted to fluidize the solid particles and to produce the combustion of at least a portion of the residues charged on said particles,
– a second regeneration enclosure (50), of circular shape, fed by second feeding means (34) with combustion-sustaining gas, at the bottom of said second enclosure, and connected to said first enclosure (31) and to said recycling means (38, 39), said second enclosure being adapted for performing a further combustion of the remaining residues,
– at least one heat exchanger (33) in said second regeneration enclosure (50), and
– separation means (35, 51) for the fumes resulting from said combustion.

13. An apparatus according to any one of claims 11 and 12, wherein said means for recycling the solid particles comprises a fluid seal (38) connected to said tank of solid particles (50) and a valve (39) interposed between said seal (38) and the pretreatment enclosure (1).

14. An apparatus according to any one of claims 11 to 13, wherein said means for recycling catalyst particles comprises a fluid seal (25) interposed between said regenerator (18) and a valve (26) for adjusting the flow towards enclosure (1), said valve being controlled by a detector of catalyst particles level in regenerator (18).

15. An apparatus according to any one of claims 11 to 14, comprising (see figure 5):
– a first pretreatment enclosure (1), of the cyclone type, with direct passage and without spiral reversal,
– inlet means (40, 5) for a liquid or gaseous charge, comprising means (5), for spraying said charge towards the inner periphery of the enclosure, the flow resulting from said charge being directed from the top to the bottom,
– inlet means for solid particles (2, 41 – figure 1) imparting to said particles a helical motion on the walls of said enclosure in the direction of flow resulting from the charge,
– means (53) for separating the solid particles, charged at least partly with residues, as a result of the passage through the first enclosure (1), on the one hand, from the first mixture of the pretreated charge with solid particles, charged at least partly with residues, on the other hand,
– means (52) for conveying said solid particles charged with residues and said mixture,
– a second enclosure of the cyclone type (60) with helical flow, with or without spiral reversal, connected to said mixture conveying means (52),
– inlet means (3, 7) for the catalyst particles in said enclosure (60),

– second means (55) for separating solid particles, on the one hand, from a second mixture of catalyst particles with the pretreated charge resulting from the passage in said second enclosure (60), on the other hand,
– inlet means (7a, 7b) (figure 2) for the second mixture in reactor 8, which consists of a substantially vertical elongate tube, and
– conveying means (54a, 54b) towards the regeneration enclosure (31), connected to said first and said second separation means (53, 55).

16. An apparatus according to any one of claims 11 to 15, wherein the inlet means (2) for solid particles is located in the upper part (1a) of the pretreatment enclosure and wherein reactor (8) is adapted to an upward flow of a pretreated charge and of catalyst particles.

17. An apparatus according to any one of claims 11 to 15, wherein said inlet means (2) for the solid particles is located in the upper part (1a) of the pretreatment enclosure, and wherein reactor (8) is adapted to a downward flow of a pretreated charge and of catalyst particles.

## Patentansprüche

1. Verfahren zum katalytischen Kracken einer Rückstandsprodukte enthaltenden Kohlenwasserstoffcharge in einer Reaktionszone mit fluidem oder sich bewegendem Bett, wobei die Charge wenigstens einer Vorbehandlung unterzogen wird, dadurch gekennzeichnet, daß wenigstens ein Teil dieser Charge in verdampfter Form und wenigstens ein Teil der Katalysatorpartikel in wenigstens einem umschlossenen Raum zirkulieren, in dem wenigstens ein Teil dieser Charge mit Feststoffpartikeln (niedriger katalytischer Aktivität), die sich von den Katalysatorpartikeln unterscheiden, kontaktiert wird, wobei diese Feststoffpartikel und diese Charge als Ganzes in der gleichen Richtung entweder nach unten oder nach oben in diesem umschlossenen Raum bei einer Temperatur zirkulieren, die im wesentlichen gleich der am Eintritt in die Reaktionszone verherrschenden Temperatur ist und daß nach dem Durchrühren der Feststoffpartikel mit diesem Teil der Charge diese vom größeren Teil der Rückstandsprodukte freie Charge von diesen Feststoffpartikeln getrennt und mit diesen Katalysatorpartikeln zur Reaktionszone geführt wird.

2. Verfahren nach Anspruch 1, dadurch gekennzeichnet, daß die Reaktionszone eine Eintrittsöffnung innerhalb dieses umschlossenen Raums aufweist und daß diese Vorbehandlung in einer Zone dieses umschlossenen Raums durchgeführt wird, die sich im wesentlichen anströmseitig zu diesem Reaktionszoneneintritt befindet.

3. Verfahren nach einem der Ansprüche 1 und 2, dadurch gekennzeichnet, daß diese Vorbehandlung die folgenden Schritte umfaßt:
– Einführen der Strömung aus Feststoffpartikeln mit einem Durchmesser, der zwischen 50 µm und 2000 µm variiert, bei einer Temperatur, die zwischen 650 und 1000°C variiert, in einem Strom aus Trägergas, der so ausgebildet ist, daß er den Partikeln eine Geschwindigkeit von 10 bis 80 m/s erteilt, derart, daß diese schraubenförmige Strömung der Feststoffpartikel erzeugt wird,

– Injizieren in diesen umschlossenen Raum wenigstens eines Teils der Charge durch Sprüh- oder Zerstäubereinrichtungen, so daß die Chargenaustrittsgeschwindigkeit zwischen 10 und 150 m/s liegt, in einer derartigen Richtung, daß der Injektionswinkel der Sprüheinrichtungen zwischen 0 und 80°, bezogen auf den durch die Sprüheinrichtungen gehenden Radius des umschlossenen Raums variiert,

– Einführen in diesen umschlossenen Raum ebenfalls wenigstens eines Teils der Katalysatorpartikel,

– Kontaktieren der Charge mit den Feststoffpartikeln bei einer Temperatur zwischen 450 und 650°C für eine Verweilzeit der Charge, die zwischen 0,01 und 10 Sekunden beträgt,

– Trennen von den die Rückstandsprodukte umfassenden Feststoffpartikeln einer Kohlenwasserstoff-Fraktion, die den Vorbehandlungsabstrom mit niedrigerem Gehalt an Koks, Metallen und Schwefel als die Charge bildet und

– Einspeisen dieses Vorbehandlungsabstroms mit den Katalysatorkrackpartikeln in diese Reaktionszone.

4. Verfahren nach einem der Ansprüche 1 bis 3, gekennzeichnet durch wenigstens einen Schritt des Regenerierens der so abgetrennten Feststoffpartikel im Wirbelbett bei einer Temperatur von 500 bis 1000°C in Anwesenheit von Sauerstoff oder eines molekularen Sauerstoff enthaltenden Gases, um die Verbrennung von wenigstens 90% der auf den Feststoffpartikeln vorhandenen Rückstandsprodukte hervorzurufen, des Trennens des größeren Teils des Verbrennungsgases von den regenerierten Partikeln, des Rezyklisierens wenigstens eines Teils dieser regenerierten Partikel zum umschlossenen Raum und des wenigstens periodischen Abziehens der Metalle enthaltenden Feststoffpartikel, die aus dem Regenerationsschritt herrühren, ohne sie zur Vorbehandlungszone zurückzuführen.

5. Verfahren nach Anspruch 4, dadurch gekennzeichnet, daß diese Regeneration in wenigstens zwei Schritten durchgeführt wird, der erste Schritt in einer im wesentlichen vertikalen und länglichen röhrenförmigen Zone, deren Verhältnis L/D (L ist die Mehrlänge, D ihr Durchmesser) zwischen 20 und 400 beträgt, und zwar vermittels eines Trägergases, das im wesentlichen aus Sauerstoff oder einem molekularen Sauerstoff enthaltenden Gas besteht, bei einer Temperatur T1, die zwischen 500 und 900°C beträgt, gefolgt von einem zweiten Regenerationsschritt in einer zweiten Zone mittels eines Trägergases, das im wesentlichen aus Sauerstoff oder molekularen Sauerstoff enthaltendem Gas besteht, bei einer Temperatur T2, die zwischen 650°C bis 1000°C beträgt, wobei T2 größer als T1 ist.

6. Verfahren nach einem der Ansprüche 1 bis 5, dadurch gekennzeichnet, daß die Feststoffpartikel gewählt sind aus der Gruppe, die besteht aus Calcit, Dolomit, Kalkstein, Bauxit, Bariumhydroxid, Chromit, Magnesiumoxid, Perlit, Aluminiumoxid und Siliziumoxid mit niedriger spezifischer Oberfläche.

7. Verfahren nach Anspruch 3, dadurch gekennzeichnet, daß das Trägergas aus Wasserdampf oder Kohlenwasserstoffen mit 1 bis 3 Kohlenstoffatomen besteht.

8. Verfahren nach einem der Ansprüche 1 bis 7, dadurch gekennzeichnet, daß die Vorbehandlung in zwei Schritten durchgeführt wird, wobei der erste Schritt in einem ersten umschlossenen Raum durchgeführt wird, indem wenigstens ein Teil der verdampften Charge mit einem Strom fluidisierter Feststoffpartikel kontaktiert wird, was nach Trennung einen ersten Vorbehandlungsabstrom ergibt, der den größeren Teil der mit Rückständen belasteten Feststoffpartikel umfaßt und einen zweiten Vorbehandlungsabstrom ergibt, der die mit den verbleibenden Rückständen belasteten Feststoffpartikel sowie den größeren Teil der Charge umfaßt, die frei von wenigstens einem Teil der Rückstände ist, und der zweite Schritt das Einspeisen dieses zweiten Abstroms in einem zweiten umschlossenen Raum umfaßt, der sich vom ersten unterscheidet, indem wenigstens eine zweite Vorbehandlung auf wenigstens einem Teil dieser Charge durchgeführt wird und daß nach dem Abtrennen dieser aus der zweiten Vorbehandlung stammenden Partikel, die mit denen des ersten Abstroms rückgewonnen werden, die vorbehandelte Charge aus diesen ersten und zweiten Vorbehandlungen mit den Katalysatorpartikeln der Reaktionszone zugeführt wird.

9. Verfahren nach einem der Ansprüche 1 bis 8, dadurch gekennzeichnet, daß diese Feststoffpartikel und diese Charge als Ganzes im Gleichstrom mit den Katalysatorpartikeln zirkulieren.

10. Verfahren nach einem der Ansprüche 1 bis 8, dadurch gekennzeichnet, daß diese Feststoffpartikel und diese Charge als Ganzes im Gegenstrom zu den Katalysatorpartikeln zirkulieren.

11. Katalytische Krackvorrichtung zur Durchführung des Verfahrens nach Anspruch 1, umfassend (Fig. 1):

– wenigstens einen umschlossenen Raum für die Vorbehandlung einer Kohlenwasserstoffcharge in der Form vom Typ Zyklon (1),

– Eintrittseinrichtungen (40, 5) für eine flüssige oder gasförmige Einrichtungen enthaltende Charge, die diese Charge gegen den Innenumfang des umschlossenen Raums versprühen (wobei der resultierende Chargenstrom nach unten oder oben gegen den Eintritt des weiter unten definierten Reaktors (8) gerichtet ist),

– Eintrittseinrichtungen (3 und 7, Figur 2) für die Katalysatorpartikel in diesem umschlossenen Raum (1),

– Eintrittseinrichtungen (2) für die Feststoffpartikel, die diesen Partikeln eine schraubenförmige Bewegung längs den Wandungen dieses umschlossenen Raums in der von der Charge stammenden Strömungsrichtung erteilen,

– Einrichtungen (27) zum Abtrennen der Feststoffpartikel von dem Gemisch aus Katalysatorpartikeln mit der vorbehandelten Charge,

– mit dem umschlossenen Raum (1) verbundene Einrichtungen (28), die die Feststoffpartikel gegen einen Kessel für Feststoffpartikel (50) fördern und wenigstens eine Einrichtung (31) zum Regenerieren dieser Feststoffpartikel und dieser Einrichtungen (38, 39) zum Rezyklisieren regenerierter Feststoffpartikel gegen den umschlossenen Vorbehandlungsraum (1),

– wenigstens eine Einrichtung (7a) zum Führen bzw. Einspeisen des Gemisches aus vorbehandelter Charge mit Katalysatorpartikeln zu oder in einen Reaktor (8), der aus einem im wesentlichen vertikalen länglichen Rohr besteht, mit einer Gleichstromzirkulation der vorbehandelten Charge und der Katalysatorpartikel entweder nach unten (dropper) oder nach oben (riser),

– Strippereinrichtungen (14, 9) zum Abtrennen des Reaktionsabstroms von den Katalysatorpartikeln, die an dem dem Einführungsende der vorbehandelten Charge und der Katalysatorpartikel gegenüberliegenden Ende vorgesehen ist,

– mit diesen Strippereinrichtungen verbundene Austrittseinrichtungen (42, 15) für den Reaktionsabstrom,

– mit diesen Stirppereinrichtungen (14, 9) verbundene Einrichtungen (16) zum Fördern von Katalysatorpartikeln gegen wenigstens einen Regenerator (18) für diese Partikel und

– Einrichtungen (24, 25, 26) zum Rezyklisieren von Katalysatorpartikeln wenigstens zum Teil gegen diesen umschlossenen Vorbehandlungsraum bzw. -kammer (1).

12. Vorrichtung nach Anspruch 11, dadurch gekennzeichnet, daß diese Einrichtungen zum Regenerieren der Feststoffpartikel umfaßt:

– einen ersten umschlossenen Regenerationsraum (31) von röhrenförmiger länglicher Gestalt und der im wesentlichen vertikal ist, der mit diesen Einrichtungen zum Fördern dieser Feststoffpartikel verbunden ist,

– eine erste Einrichtung (44) zum Beaufschlagen des Bodens der Regenerationskammer bzw. des Regenerationsraums (31) mit einem die Verbrennung aufrecht erhaltenden Gas (O$_2$, Luft), das so ausgebildet ist, daß es die Feststoffpartikel fluidisiert und die Verbrennung von wenigstens einem Teil der auf die Partikel aufgegebenen Rückstände hervorruft,

– einen zweiten umschlossenen Regenerationsraum (50) kreisförmiger Gestalt, der von einer zweiten Speiseeinrichtung (34) mit die Verbrennung unterhaltendem Gas am Boden dieser zweiten Kammer beaufschlagt wird und mit dieser ersten Kammer (31) und dieser Rezyklisiereinrichtung (38, 39) verbunden ist, wobei diese zweite Kammer so ausgelegt ist, daß sie eine weitere Verbrennung der verbleibenden Rückstände durchführt,

– wenigstens einen Wärmeaustauscher (33) in dieser zweiten Regenerationskammer (50) und

– Separatoreinrichtungen (35, 51) für die aus der Verbrennung stammenden Rauchgase.

13. Vorrichtung nach einem der Ansprüche 11 und 12, dadurch gekennzeichnet, daß diese Einrichtung zum Rezyklisieren der Feststoffpartikel eine erste Abdichtung (38) umfaßt, die mit diesem Feststoffpartikelkessel (50) verbunden ist und daß ein Ventil (39) zwischen dieser Abdichtung (38) und die Vorbehandlungskammer (1) zwischengeschaltet ist.

14. Vorrichtung nach einem der Ansprüche 11 bis 13, dadurch gekennzeichnet, daß diese Einrichtung zum Rezyklisieren der Katalysatorpartikel eine Fluidabdichtung (25) umfaßt, die zwischen diesen Regenerator (18) und ein Ventil (26) zwischengeschaltet ist, um die Strömung gegen die Kammer (1) einzustellen, wobei dieses Ventil über einen Detektor für das Niveau der Katalysatorpartikel in dem Regenerator (18) geregelt ist.

15. Vorrichtung nach einem der Ansprüche 11 bis 14 umfassend (siehe Figur 5):

– eine erste Vorbehandlungskammer (1) vom Zyklontyp mit direktem Durchlaß und ohne Spiralumkehrung.

– Eintrittseinrichtungen (40, 5) für eine flüssige oder gasförmige Charge mit einer Einrichtung (5) zum Versprühen dieser Charge gegen den Innenumfang der Kammer, wobei die aus dieser Charge resultierende Strömung nach unten gerichtet ist,

– Eintrittseinrichtungen für Feststoffpartikel (2, 41 – Figur 1), die diesen Partikeln eine schraubenförmige Bewegung auf den Wandungen dieser Kammer in der aus der Charge resultierenden Strömungsrichtung erteilt,

– eine Einrichtung (53) zum Abtrennen der Feststoffpartikel, die teilweise mit Rückständen beladen sind als ein Ergebnis des Durchgangs durch die erste Kammer (1) einerseits aus dem ersten Gemisch der vorbehandelten Charge mit Feststoffpartikeln, die wenigstens teilweise mit Rückständen beladen sind, andererseits,

– eine Einrichtung (52) zum Fördern der mit Rückständen beladenen Feststoffpartikel und dieses Gemisches,

– eine zweite Kammer vom Zyklontyp (60) mit schraubenförmiger Strömung mit oder ohne Spiralumkehr, die mit der Gemischfördereinrichtung (52) verbunden ist,

– Eintrittseinrichtungen (3, 7) für die Katalysatorpartikel in dieser Kammer (60),

– eine zweite Einrichtung (55) zum Abtrennen der Feststoffpartikel einerseits von einem zweiten Gemisch der Katalysatorpartikel mit der vorbehandelten Charge, die aus dem Durchgang in dieser zweiten Kammer (60) stammt, andererseits,

– Eintrittseinrichtungen (7a, 7b) (Figur 2) für das zweite Gemisch im Reaktor (8), der aus einem im wesentlichen vertikalen länglichen Rohr besteht und

– Fördereinrichtungen (54a, 54b) gegen die Regenerationskammer (31), die mit dieser ersten und zweiten Separatoreinrichtung (53, 55) verbunden ist.

16. Vorrichtung nach einem der Ansprüche 11 bis 15, dadurch gekennzeichnet, daß die Eintrittseinrichtung für die Feststoffpartikel in dem oberen Teil (1a) der Vorbehandlungskammer positioniert ist und daß der Reaktor (8) für eine Aufwärtsströmung von einer vorbehandelten Charge und von Katalysatorpartikeln ausgelegt ist.

17. Vorrichtung nach einem der Ansprüche 11 bis 15, dadurch gekennzeichnet, daß diese Eintrittseinrichtung (2) für die Feststoffpartikel in dem oberen Teil (1a) der Vorbehandlungskammer positioniert ist und daß der Reaktor (8) für eine Abwärtsströmung von einer vorbehandelten Charge und von Katalysatorpartikeln ausgelegt ist.

FIG.1

FIG.5

FIG.2

FIG.3

FIG.4

**FIG.6**

**FIG.7**